# EUROPEAN PATENT SPECIFICATION

(11) **EP 1 735 956 B1**
(45) Date of publication and mention of the grant of the patent: **06.07.2011**
(21) Application number: 05718593.6
(22) Date of filing: 30.03.2005
(51) Int. Cl.: H04W 36/32

(54) **LOCATION BASED HANDOFF FOR MOBILE DEVICES**
AUF POSITION BASIERENDE WEITERREICHUNG FÜR MOBILE EINRICHTUNGEN
TRANSFERT BASÉ SUR LA POSITION POUR DISPOSITIFS MOBILES

(30) Priority: 06.04.2004 US 559756 P; 09.06.2004 US 578337 P
(43) Date of publication of application: 27.12.2006
(73) Proprietor: Koninklijke Philips Electronics N.V., 5621 BA Eindhoven (NL); U.S. Philips Corporation, New York, NY 10020 (US)
(72) Inventor: KAHLERT, Joachim, J., NL-5621 BA Eindhoven (NL); BAUMEISTER, Markus, NL-5621 BA Eindhoven (NL); WISCHHUSEN, Olaf, NL-5621 BA Eindhoven (NL)
(74) Representative: Schouten, Marcus Maria
(86) International application number: PCT/IB2005/051066
(87) International publication number: WO 2005/099173

(56) References cited:
- WO-A-00/28768
- WO-A-03/107704
- US-A1- 2003 036 374
- US-A1- 2003 043 073
- US-A1- 2003 118 015
- US-A1- 2004 039 817

## Description

### Background of the Invention

The present invention relates to the communications arts. It finds particular application in the wireless local area network systems (WLAN) and will be described with particular reference thereto. However, the invention may also find application in other communications systems.

US 2003/0043073 A1 discloses a system and method for performing real-time position detection and motion tracking of mobile communication devices moving in a defined space comprised of a plurality of locals. A plurality of access points is disposed about the space to provide an interface between mobile devices and a network having functionality and data available or accessible therefrom. Signal strengths between the mobile device and the plurality of access points are determined for generating actual signal strength data. The actual signal strength data are compared against a known statistical signal strength model which describes non-uniform signal strength profiles within the defined space, wherein the actual location of the mobile device within the defined space is determined based on the comparison result. Thus, the mobile device scans the plurality of access points to determine actual signal strength data, and the actual signal strength data are compared against the statistical signal strength model, in order to determine the actual position of the mobile device, while the mobile device moves within the defined space.

US 2004/0039817 A1 discloses a wireless network, wherein a wireless station selects an access point, for example, during power-up or roaming, based on a received signal strength indicator (RSSI) and channel loading information. The RSSI information is measured by the receiving station when a beacon or probe response frame is received, and the channel loading information is communicated to the station through the beacon or probe response frames. The channel loading information is a percentage of time the access point is busy transmitting or receiving data during a reporting interval. By using both RSSI and channel loading information, performance is increased when the access point with the strongest signal is also the busiest. In this case, this access point would not be selected for association with the wireless station.

US 2003/0118015 A1 discloses a method of notifying a mobile terminal that a wireless local area network is present, wherein the mobile terminal is connected to a wireless communication network. The location of the mobile terminal is determined and compared with a known location of the wireless local area network. In response to the comparison the mobile terminal of the wireless local area network is notified via the wireless communication network.

US 2003/0036374 A1 discloses a wireless local area network that uses impulse radio technology to improve communications between a mobile node and an access point. The wireless local area network comprises a positioning network capable of determining a position of the mobile node and also capable of informing at least a first access point about the determined position of the mobile node. The mobile node interacting with the first access point can now have more lead time to interact with a second access point before the mobile node has to handoff communications to the second access point. The positioning network preferentially uses impulse radio technology to periodically determine the position of the mobile node.

WLAN is a flexible data communications system implemented as an extension to, or as an alternative for, a wired local area network (LAN). Typically, WLAN uses radio frequency (RF) technology to transmit and receive data over the air without relying on any physical connection. The data being transmitted is superimposed on the radio carrier so that it can be accurately extracted at the receiving end. Multiple radio carriers exist in the same space at the same time without interfering with each other, provided that the radio waves are transmitted on different radio frequencies. To extract data, a radio receiver tunes in one frequency while rejecting all other frequencies.

In a typical WLAN system, a transmitter/receiver device, called an access point, connects to the wired network from a fixed location using standard cabling. Typically, the access point receives, buffers, and transmits data between the WLAN and the wired network infrastructure. Generally, a single access point supports a small group of users and can function in a range of approximately thirty to fifty meter radius. End users access the WLAN through WLAN adapters, which are implemented as PC cards in notebook or palmtop computer, as cards in desktop computers, or integrated within handheld computers. WLAN adapters provide an interface between the client network operating system (NOS) and the airways via antenna.

Generally, in a large facility such as an office, a hospital, a manufacturing facility, or the like, it is necessary to install more than one access point. The access points are installed to blanket the area with overlapping coverage cells so that the clients can roam seamlessly throughout the area without ever loosing contact. When a client moves from one area to another, a handoff has to be performed to assign new system resources associated with the new access point. The handoff involves executing a set of negotiations between the mobile device and a central computer. As a result, the client is handed over from one access point to another in a way that is invisible to the client. Generally, a handoff improves performance of the system at the expense of tying up more system resource.

Efficient and timely handoff procedures are very important within the WLAN which has small operating cells and great demand for increased communications system capacity. A typical approach for a mobile device handoff is to scan all radio frequencies within the WLAN operational space to determine a relative strength of the mobile device signal. However, with many users being hooked up to the WLAN and numerous crossings of cells boundaries, this approach considerably ties up system resources and slows down communications throughput.

There is a need for technique that provides adaptive, fast, efficient, seamless, and cost effective handoff of mobile units in WLAN. The present invention contemplates a new and improved method and apparatus that overcomes the above-reverenced problems and others.

### Summary of the Invention

In accordance with one aspect of the present invention, a communications system is disclosed. A plurality of mobile wireless units and a plurality of access points, each surrounded by an associated operational cell, are located within a defined area of a WLAN. The operational cells are overlappingly disposed in the defined space. Each access point operates at a dedicated frequency. A means tracks a movement of at least one mobile device within the defined space. A means scans identified scanning frequencies of nearby access points to measure actual signal strengths between the at least one mobile device and each of the nearby access points. A means calculates at least a position of the at least one mobile device by comparing the actual signal strengths with a map of relative signal strengths at predefined locations in the defined space. A means assigns an access point with a strongest signal to the at least one mobile device based on its location and the map of relative strengths in the defined space, wherein the scanning means only scans the frequencies of the assigned nearby access points for tracking the movement of the at least one mobile device.

In accordance with another aspect of the present invention, a method for handing off at least one mobile device from one access point to another in a wireless local area network is disclosed. A movement of the at least one mobile device within the defined space is tracked. Identified scanning frequencies corresponding to each of an identified plurality of nearby access points are scanned. Actual signal strengths at each of the identified frequencies between the at least one mobile device and the identified access points are measured. At least a position of the at least one mobile device is calculated by comparing the actual signal strengths with a map of relative signal strengths at predefined locations in the defined space. Nearby access points with strongest signals are assigned to the at least one mobile device based on the calculated location and the map. For tracking the movement of the at least one mobile device only the frequencies of the assigned nearby access points are scanned..

One advantage of the present invention resides in the fast and efficient handoff of the wireless mobile units in the wireless local area network.

Another advantage resides in the cost effective handoff.

Still further advantages and benefits of the present invention will become apparent to those of ordinary skill in the art upon reading and understanding the following detailed description of the preferred embodiments.

### Brief Description of the Drawings

The invention may take form in various components and arrangements of components, and in various steps and arrangements of steps. The drawings are only for purposes of illustrating the preferred embodiments and are not to be construed as limiting the invention.
FIGURE 1 schematically shows a portion of a WLAN communications system; and
FIGURE 2 schematically shows a part of a WLAN communications system in accordance with the present application.

### Detailed Description of the Preferred Embodiment

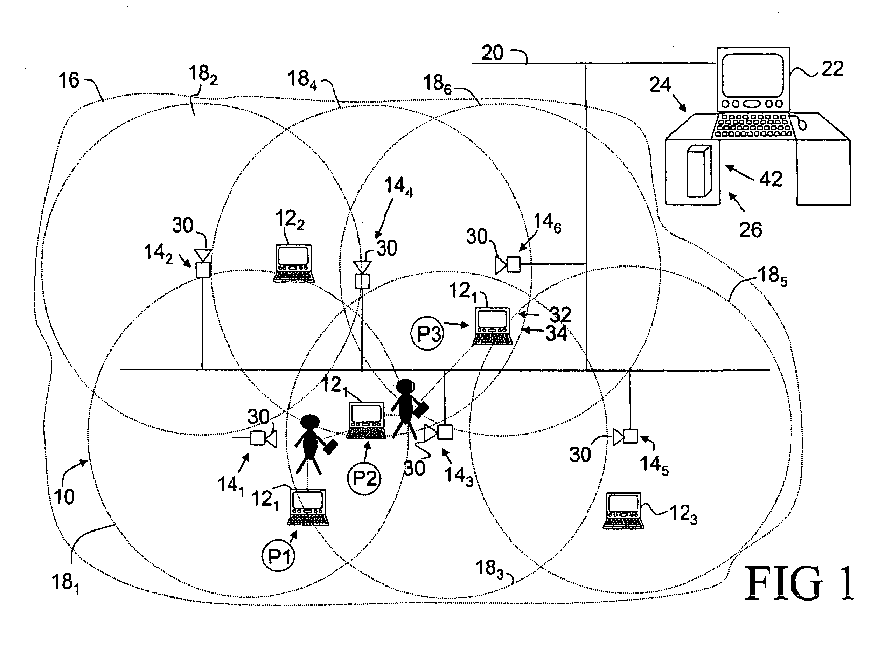

With reference to FIGURE 1, a wireless local area network **10** includes one or more mobile devices or units **12₁, 12₂, ..., 12ₙ**. Preferably, the mobile devices **12₁, 12₂, ..., 12ₙ** are palm computers, notebook computers, held-hand devices, PDAs, pagers, desktop computers, or any other devices which can be configured for wireless communications. Generally, the network **10** couples multiple access points or stations **14₁, 14₂, ..., 14ₙ** (only six access points are shown for simplicity of illustration), which are distributed throughout a defined area or space **16** to provide wireless service to the mobile devices **12₁, 12₂, ..., 12ₙ** which operate within the space **16** and are configured to communicate with the access points **14₁, 14₂,** ..., **14ₙ.** Each access point **14₁, 14₂,** ..., **14ₙ** has a finite operational range or access point cell **18₁, 18₂,** ..., **18ₙ,** which is typically 30-50 meters. Each access point **14₁, 14₂,** ..., **14ₙ** operates within its own dedicated radio channel with a known radiofrequency. Because the operational ranges **18₁, 18₂,** ..., **18ₙ** overlap within the area **16**, each channel operates at a unique radiofrequency to prevent concurrent communications of the mobile device **12₁, 12₂,** ..., **12ₙ** with more than one access point at the same frequency. Of course, it is also contemplated that other WLAN designs can be used, in which the frequencies can be reused.

The access points **14₁, 14₂,** ..., **14ₙ** are wired or otherwise connected into a wired network infrastructure or a local area network **20.** A central computer **22,** which is connected to the local area network **20** and includes associated software means **24** and hardware means or processor **26,** oversees the operations of the WLAN system **10** and, preferably, provides an interface to various systems and/or applications which are available within the local area network **20.**

Each access point **14₁, 14₂,** ..., **14ₙ** includes an antenna or receiving/transmitting means 30 to communicate bi-directionally with the mobile devices **12₁, 12₂,** ..., **12ₙ.** E.g., the access points **14₁, 14₂,** ..., **14ₙ** at least receive, buffer, and transmit data between the mobile devices **12₁, 12₂,** ..., **12ₙ** and the wired network **20.** Each mobile device **12₁, 12₂,** ..., **12ₙ** includes associated hardware means **32** and software means **34.** The hardware and software means **32, 34** are implemented or integrated into the mobile devices **12₁, 12₂,** ..., **12ₙ** to provide an interface between the mobile devices **12₁, 12₂,** ..., **12ₙ** and the receiving/transmitting means **30.**

With continuing reference to FIGURE 1, when the mobile device **12₁** is in the cell **18₁,** it communicates with the access point **14₁.** As the mobile device **12₁** moves within the defined area **16,** the processor **26** executes a set of instructions and, if the handoff is determined to be necessary, handoffs the mobile unit **12₁** to another access point as will be discussed in a greater detail below.

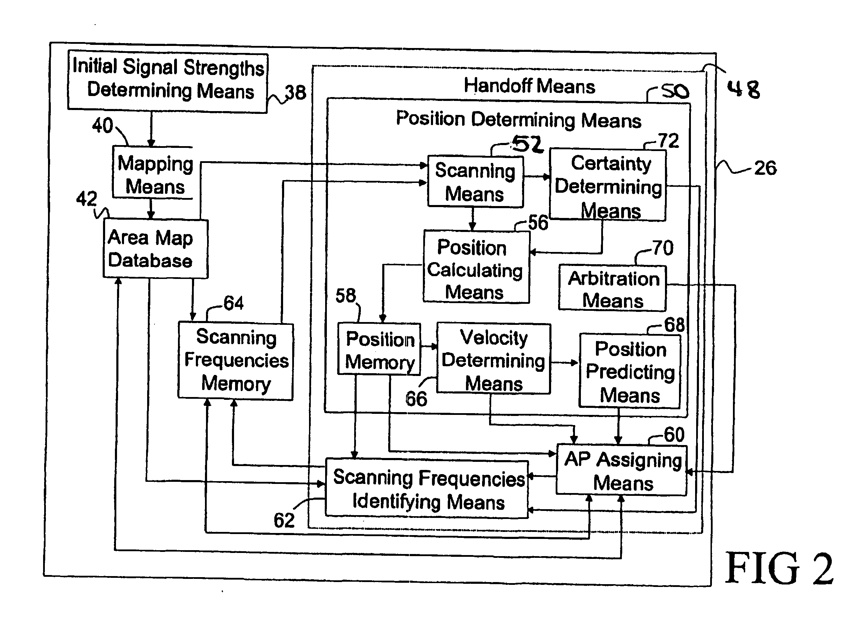

With reference to FIGURE 2, an initial signal strengths determining means or computer routine or algorithm **38** determines initial signal strengths, i.e. signal gradients, at predefined locations. Optionally, the initial signal strengths determining means **38** defines the initial signal strengths at the predefined locations statistically. A mapping means **40** maps the initial signal strengths into the defined space **16.** A two- or three-dimensional geographical signal strength map of the area **16** indicating all of the stations or access points **14₁, 14₂,** ..., **14ₙ,** associated operational frequencies, and the defined initial signal strengths are stored in a database or an area map memory **42.** Preferably, the database **42** is located at the central computer **22.** Optionally, the database **42** is located within the WLAN **10,** e.g. at the mobile device **12₁, 12₂,** ..., **12ₙ.**

A handoff means or computer routine or algorithm **48** executes an access point assignment and subsequent handoff to the closest access points for determined locations and identifies a channel with the strongest signal, e.g. the best signal to noise ratio, of the mobile devices **12₁, 12₂,** ..., **12ₙ** within the defined space **16.** More specifically, when one of the mobile units **12₁, 12₂,** ..., **12ₙ,** such as the mobile unit **12₁,** is powered up, a position determining means or computer routine or algorithm **50** determines the location of the mobile device **12₁** within the defined space **16.** A scanning means or computer routine or algorithm **52** scans operational frequencies of the channels of all the access points within the defined space **16** to determine gradients of actual signal strengths between the mobile device **12₁** and each of the scanned frequencies. The scanned frequencies are presented in an order of the gradients, e.g. from the highest gradient to lowest, and are stored in a scanned frequencies memory **64.** A position calculating means or computer routine or algorithm **56** calculates a position of the mobile device **12₁,** e.g. the initial position **P1,** by comparing the actual signal strengths against the mapped signal strengths. Preferably, the position is determined from the relative signal strengths of the three strongest frequencies, normally the three closest stations. However, other numbers of frequencies/stations for determining the position of the mobile units can be used. A larger number gives greater positional accuracy. In some instances, less than three may identify the location of the mobile unit uniquely, particularly when walls and other physical obstructions are considered.

The determined position **P1** is stored in a position memory **58.** An access point assigning means or computer routine or algorithm **60** identifies a location of an access point with the strongest signal and assigns it to the mobile device **12₁.** A scanning frequencies identifying means or computer routine or algorithm **62** identifies frequencies of, preferably three adjacent channels, e.g. three access points **14₁, 14₃, 14₄** which are closest to the position **P1** which typically have the strongest signals. The three adjacent access points and corresponding frequencies of each associated channel are stored in a scanning frequencies memory **64.**

As the mobile device **12₁** moves from the position **P1** towards position **P2,** the signal strength between the mobile device **12₁** and the access point **14₁** is declining and signal strength between the mobile device **12₁** and the access points **14₃** and **14₄** is increasing. With the defined space **16** being mapped, the scanning means 52 periodically scans the three stored adjacent frequencies to collect the signal strength values between the mobile device **12₁** and the frequencies of the three closest access points as the mobile device **12₁** moves from the position **P1** toward the position **P2.** The position calculating means **56** calculates a new position of the mobile device **12₁.** Preferably, the exact position of the mobile device **12₁** is triangulated by comparing the actual signal strengths at the three measured frequencies. A velocity determining means or computer routine or algorithm **66** compares location results of the periodic scanning and determines speed and direction of movement of the mobile device **12₁** or any other mobile device within the defined space **16.** Based on the speed and direction of the mobile device, a future position predicting means or computer routine or algorithm **68** predicts future positions of the mobile device as well as projected future signal strengths between the mobile device and access points of the cell in which the mobile device is located and adjacent cells.

If it is determined that the mobile device **12₁** is approaching a new position, e.g. the position **P2,** at which the map **42** shows a different access point will have stronger signal, the access point assigning means 60 assigns the mobile device **12₁** a new primary communication access point which, preferably, has the strongest signal. By consulting the map **42,** the scanning frequencies identifying means **62** identifies the frequencies of the, preferably, three access points **14₁, 14₄, 14₆** that provide the strongest signals with the new position **P2.** In this example, the three access points which measure location stay the same, but the access point through which communication occurs shifts from **14₁** to **14₃.**

As the mobile device moves toward location **P3,** one of the three location measurement access points changes, i.e., the three closest change from **14₁**, **14₃**, and **14₄** to **14₃, 14₄,** and **14₆.** The change over from access point **14₁** to **14₆** is preferably done at the time which the position predicting means predicts the mobile device will become closer to access point **14₆** than to access point **14₁.** In this manner, if the mobile device is moving so fast compared to the location sampling interval that it will be out of range of access point **14₁,** it will still seamlessly triangulate its position off of access points **14₃, 14₄,** and **14₆.** The three new adjacent access points and corresponding frequencies of each associated channel are stored in the scanning frequencies memory 64 to be periodically analyzed by the position determining means 50 to monitor the position of the mobile device 12₁. The AP assigning means 60 accesses the map 42 and the scanning frequencies memory 64 to retrieve the frequencies of the new access point 14₆ and the discontinued access point 14₁. This frequency change is communicated to the mobile device to cause a seamless change in the scanning frequencies without searching all frequencies looking for the new closest access points.

With continued movement to P3, the communication frequency is changed from the frequency of access point 14₃ to the frequency of access point 14₆.

In some circumstances, the access point assigning means 62 may not assign a mobile unit to the access point with the strongest signal. The access point assigning means 60 confers with an arbitration means or computer algorithm 70 to determine the best overall distribution of the assignment of the mobile devices to the access point. In one example, the arbitration means 70 looks to see if any access point is over-crowded or approaching capacity. If a mobile unit is approaching a near capacity access point, the handoff is deafened until the map 42 shows it is moving beyond a signal strength of its current access point or another mobile device moves out of the over-crowded access point's region. As a second example, the arbitration means 70 projects how long the mobile unit will be in the new access point region from the trajectory of its projected velocity and the map- If the projected trajectory will only pass briefly through the new zone without loosing satisfactory signal strength from its current access point or the next yet projected access point, the handoff from the current access point to the next access point and from the next access point to the next yet access point can be skipped in favor of a handoff directly from the current access point to the third next yet access point.

With continuing reference to FIGURE 2, to improve the accuracy and reliability of position tracking, more than three scanning frequencies of the neighboring access points are selected for scanning to track the position of the mobile device 12₁. 12₂, ..., 12ₙ. The number of the adjacent access points (scanned frequencies) varies as a function of the certainty of the position accuracy to minimize the number of channels to be scanned to determine the accurate position of the mobile unit 12₁ as it moves within the defined area 16. As position becomes less certain, more nearby

access points are scanned; as the position becomes more certain, fewer access points are scanned.

More specifically, as the position calculating means **56** determines the position of the mobile device **12₁,** a certainty determining means **72** determines a certainty of accuracy of the determined location based on prespecified factors such as longer intervals between samplings, motion at high rate of speed, motion along an erratic trajectory, or the like. The determined certainty is compared with a threshold which is preferably predetermined in advance based on certain criteria. Of course, it is also contemplated that the threshold can be varied to restrict or increase the number of scanned frequencies based on the system requirements. If the determined certainty is below the threshold, the scanning frequencies identifying means **62** accesses the area map database **42** and selects all operational frequencies existing within the area **16** for scanning. The scanned frequencies are presented in an order of the gradients, e.g. from the highest gradient to the lowest, and are stored in the scanned frequencies memory **64.** The position calculating means **56** recalculates the position of the mobile device **12₁,** and the certainty determining means **72** determines the certainty of the recalculated position. The redetermined certainty is compared with the threshold. If the determined certainty is still below the threshold, the position calculating means 56 requests more frequencies from the scanned frequencies memory **64.** The certainty determining means **72** recalculates the certainty each time an additional frequency is added to the position calculation and compares the determined certainty with the threshold until the threshold is reached and/or exceeded. The identified optimal adjacent access points and corresponding frequencies are stored in the scanning frequencies memory **64** to be scanned by the scanning means **52** to determine the speed and position of the mobile device **12₁** with more accuracy.

The invention has been described with reference to the preferred embodiments. Modifications and alterations will occur to others upon reading and understanding of the preceding detailed description. It is intended that the invention be construed as including all such modifications and alterations insofar as they come within the scope of the appended claims.

## Claims

1. A communications system comprising:
a plurality of mobile wireless units **(12₁, 12₂, ..., 12ₙ)** located within a defined space **(16)** of a wireless local area network **(10);**
a plurality of access points **(14₁, 14₂, ..., 14ₙ)** disposed at known locations in the defined space **(16),** each access point **(14₁, 14₂, ..., 14ₙ)** operating at a dedicated frequency;
a means **(50)** for tracking movement of at least one mobile device **(12₁)** within the defined space **(16)** including:
a means **(52)** for scanning identified scanning frequencies of nearby access points to measure actual signal strengths between the at least one mobile device **(12₁)** and each of the nearby access points, and
a means **(56)** for calculating at least a location of the at least one mobile device **(12₁)** by comparing the actual signal strengths with a map **(42)** of relative signal strengths at predefined locations in the defined space **(16);**
**characterized by**
a means (60) for assigning the nearby access points with strongest signals to the at least one mobile device **(12₁)** based on its location and the map **(42)** of relative strengths in the defined space **(16)**; wherein the scanning means **(52)** only scans the frequencies of the assigned nearby access points for tracking the movement of the at least one mobile device **(12₁).**

2. The system as set forth in claim 1, wherein the tracking means **(50)** tracks the movement of the at least one mobile device **(12₁)** by periodically scanning the frequencies of three assigned access points adjacent the calculated location.

3. The system as set forth in claim 1, wherein the position tracking means **(50)** includes:
a velocity estimating means **(66)** for determining speed and direction of movement of the at least one mobile device **(12₁).**

4. The system as set forth in claim 2, wherein the tracking means **(50)** includes:
a means **(68)** for predicting future locations of the mobile device **(12₁),** the assigning means **(60)** assigning the nearby access points based on the predicted location.

5. The system as set forth in claim 1, further including:
a means **(72)** for determining a degree of certainty of an accuracy of the calculated location.

6. The system as set forth in claim 5, wherein the number of nearby access points is a function of location accuracy certainty and the tracking means **(50)** tracks the movement of the at least one mobile device **(12₁)** by periodically scanning a variable number of frequencies.

7. The system as set forth in claim 1, further including:
a means **(38)** for measuring a plurality of initial signal strengths at predefined locations within the defined space **(16);**
a means **(40)** for mapping the initial signal strengths in relation to predefined locations in the defmed space **(16);** and
a means **(62)** for identifying locations and scanning frequencies of the access points in the defined space **(16).**

8. A method for handing off at least one mobile device **(12₁)** from one access point to another in a wireless local area network **(10),** the method comprising:
tracking a movement of the at least one mobile device **(12₁)** within the defined space **(16)** including:
scanning identified scanning frequencies corresponding to each of an identified plurality of nearby access points,
measuring actual signal strengths at each of the identified frequencies between the at least one mobile device **(12₁)** and the identified access points, and
calculating at least a location of the at least one mobile device **(12₁)** by comparing the actual signal strengths with a map of relative signal strengths at predefined locations in the defined space; and
**characterized by**
assigning nearby access points with strongest signals to the at least one mobile device **(12₁)** based on the calculated location and the map **(42);**
scanning only the frequencies of the assigned nearby access points for tracking the movement of the at least one mobile device **(12₁).**

9. The method as set forth in claim 8, further including:
tracking the movement of the at least one mobile device **(12₁)** by periodically scanning the frequencies of the three nearest access points.

10. The method as set forth in claim 8, further including:
updating the frequencies of the nearest access points as the mobile device changes location.

11. The method as set forth in claim 8, further including:
estimating at least a speed and a direction of movement of the mobile device **(12₁);**
predicting the mobile device location from the estimated speed and direction; and
reassigning the nearest access points based on the predicted location and the map **(42).**

12. The method as set forth in claim 8, further including:
measuring a plurality of initial signal strengths at predefined locations within a defined space **(16);**
mapping the initial signal strengths in relation to locations in the defined space **(16); and**
identifying a plurality of locations and scanning frequencies of the access points **(14₁, 14₂,** ..., **14ₙ)** located in the defined space **(16).**

13. The method as set forth in claim 12, further including:
determining a certainty of an accuracy of the calculated location of the mobile device.

14. The method as set forth in claim 13, further including:
based on the certainty of the location calculation accuracy, adjusting a number of nearest access points whose frequencies are scanned; and
tracking the movement of the mobile device **(12₁)** by periodically scanning the frequencies of the currently nearest access points.

15. The method as set forth in claim 13, further including:
comparing the determined certainty with a requested threshold.

16. The method as set forth in claim 15, further including:
(a) in response to the certainty being below the requested threshold, scanning the scanning frequencies of a large number of the access points located in the defined space **(16);**
(b) measuring actual signal strengths at each of the scanning frequencies between the at least one mobile device **(12₁)** and the corresponding access point;
(c) organizing the measured signal strengths in a categorized list;
(d) recalculating the location of the at least one mobile device **(12₁);**
(e) recalculating a certainty of an accuracy of the recalculated location of the mobile device; and
(f) comparing the recalculated certainty with the requested threshold.

17. The method as set forth in claim 16, further including:
in response to the recalculated certainty being greater than the requested threshold, selecting at least three access points from the categorized list based on signal strengths.

18. The method as set forth in claim 16, further including:
in response to the recalculated certainty being below the requested threshold, measuring the number of the scanning frequencies from the categorized list;
repeating steps (d)-(f) until the threshold is exceeded; and
identifying a set of optimal scanning frequencies.

19. The method as set forth in claim 13, wherein a number of nearest access points is a variable based on the determined certainty of the location calculation accuracy.

20. The method as set forth in claim 8, wherein the frequencies of the nearby access points are different.

21. The method as set forth in claim 8, further including:
handing off a plurality of mobile devices in the defined space **(16);**
evaluating an overall distribution of the mobile devices in the defined space **(16)** to determine a capacity of each access point; and
assigning the nearest access points to each mobile device based at least on both the determined capacity and the actual signal strength.

22. A computer readable medium having stored thereon instructions that cause a computer processor (26) to perform steps of the method according to any of claims 8 to 21.

## Patentansprüche

1. Kommunikationssystem, das Folgendes umfasst:
eine Vielzahl von mobilen drahtlosen Einheiten (12₁, 12₂, ..., 12ₙ), die sich innerhalb eines definierten Raums (16) eines drahtlosen lokalen Netzwerks (10) befinden;
eine Vielzahl von Zugangspunkten (14₁, 14₂, ..., 14ₙ), die an bekannten Positionen in dem definierten Raum (16) angeordnet sind, wobei jeder Zugangspunkt (14₁, 14₂, ..., 14ₙ) mit einer bestimmten Frequenz arbeitet;
ein Mittel (50) zum Verfolgen der Bewegung von mindestens einer mobilen Einrichtung (12₁) innerhalb des definierten Raums (16), wobei das Mittel Folgendes umfasst:
ein Mittel (52) zum Abtasten identifizierter Abtastfrequenzen von in der Nähe befindlichen Zugangspunkten, um tatsächliche Signalstärken zwischen der mindestens einen mobilen Einrichtung (12₁) und jedem der in der Nähe befindlichen Zugangspunkte zu messen, und
ein Mittel (56) zum Berechnen von mindestens einer Position der mindestens einen mobilen Einrichtung (12₁) durch Vergleichen der tatsächlichen Signalstärken mit einer Karte (42) der relativen Signalstärken an vordefinierten Positionen in dem definierten Raum (16);
**gekennzeichnet durch**
ein Mittel (60) zum Zuweisen der in der Nähe befindlichen Zugangspunkte mit den stärksten Signalen zu der mindestens einen mobilen Einrichtung (12₁) basierend auf ihrer Position und der Karte (42) der relativen Stärken in dem definierten Raum (16); wobei das Abtastmittel (52) nur die Frequenzen der zugewiesenen in der Nähe befindlichen Zugangspunkte abtastet, um die Bewegung der mindestens einen mobilen Einrichtung (12₁) zu verfolgen.

2. System nach Anspruch 1, wobei das Verfolgungsmittel (50) die Bewegung der mindestens einen mobilen Einrichtung (12₁) durch periodisches Abtasten der Frequenzen von drei zugewiesenen Zugangspunkten verfolgt, welche der berechneten Position benachbart sind.

3. System nach Anspruch 1, wobei das Positionsverfolgungsmittel (50) Folgendes umfasst:
ein Geschwindigkeitsschätzungsmittel (66) zum Ermitteln der Geschwindigkeit und Richtung der Bewegung der mindestens einen mobilen Vorrichtung (12₁).

4. System nach Anspruch 2, wobei das Verfolgungsmittel (50) Folgendes umfasst:
ein Mittel (68) zum Vorhersagen zukünftiger Positionen der mobilen Einrichtung (12₁), wobei das Zuweisungsmittel (60) die in der Nähe befindlichen Zugangspunkte basierend auf der vorhergesagten Position zuweist.

5. System nach Anspruch 1, das weiterhin Folgendes umfasst:
ein Mittel (72) zum Ermitteln eines Grads der Sicherheit einer Genauigkeit der berechneten Position.

6. System nach Anspruch 5, wobei die Anzahl der in der Nähe befindlichen Zugangspunkte eine Funktion der Positionsgenauigkeitssicherheit ist und das Verfolgungsmittel (50) die Bewegung der mindestens einen mobilen Einrichtung (12₁) durch periodisches Abtasten einer variablen Anzahl von Frequenzen verfolgt.

7. System nach Anspruch 1, das weiterhin Folgendes umfasst:
ein Mittel (38) zum Messen einer Vielzahl von anfänglichen Signalstärken an vordefinierten Positionen innerhalb des definierten Raums (16);
ein Mittel (40) zum Abbilden der anfänglichen Signalstärken in Bezug auf vordefinierte Positionen in dem definierten Raum (16); und
ein Mittel (62) zum Identifizieren von Positionen und Abtasten von Frequenzen der Zugangspunkte in dem definierten Raum (16).

8. Verfahren zur Weiterreichung mindestens einer mobilen Einrichtung (121₎ von einem Zugangspunkt zu einem anderen in einem drahtlosen lokalen Netzwerk (10), wobei das Verfahren Folgendes umfasst:
Verfolgen einer Bewegung der mindestens einen mobilen Einrichtung (12₁) innerhalb des definierten Raums (16), Folgendes umfassend:
Abtasten identifizierter Abtastfrequenzen, welche jedem von einer identifizierten Vielzahl von in der Nähe befindlichen Zugangspunkten entsprechen,
Messen tatsächlicher Signalstärken bei jeder der identifizierten Frequenzen zwischen der mindestens einen mobilen Einrichtung (12₁) und den identifizierten Zugangspunkten, und
Berechnen mindestens einer Position der mindestens einen mobilen Einrichtung (12₁) durch Vergleichen der tatsächlichen Signalstärken mit einer Karte von relativen Signalstärken an vordefinierten Positionen in dem definierten Raum; und
**gekennzeichnet durch**
Zuweisen von in der Nähe befindlichen Zugangspunkten mit den stärksten Signalen zu der mindestens einen mobilen Einrichtung (12₁) basierend auf der berechneten Position und der Karte (42);
Abtasten von nur den Frequenzen der zugewiesenen in der Nähe befindlichen Zugangspunkte, um die Bewegung der mindestens einen mobilen Einrichtung (12₁) zu verfolgen.

9. Verfahren nach Anspruch 8, das weiterhin Folgendes umfasst:
Verfolgen der Bewegung der mindestens einen mobilen Einrichtung (12₁) durch periodisches Abtasten der Frequenzen der drei nächstgelegenen Zugangspunkte.

10. Verfahren nach Anspruch 8, das weiterhin Folgendes umfasst:
Aktualisieren der Frequenzen der nächstgelegenen Zugangspunkte, wenn sich die Position der mobilen Einrichtung ändert.

11. Verfahren nach Anspruch 8, das weiterhin Folgendes umfasst:
Schätzen von mindestens einer Geschwindigkeit und einer Richtung der Bewegung der mobilen Einrichtung (12₁);
Vorhersagen der Position der mobilen Einrichtung (12₁) anhand der geschätzten Geschwindigkeit und Richtung; und
erneutes Zuweisen der nächstgelegenen Zugangspunkte basierend auf der vorhergesagten Position und der Karte (42).

12. Verfahren nach Anspruch 8, das weiterhin Folgendes umfasst:
Messen einer Vielzahl von anfänglichen Signalstärken an vordefinierten Positionen innerhalb eines definierten Raums (16);
Abbilden der anfänglichen Signalstärken in Bezug auf Positionen in dem definierten Raum (16); und
Identifizieren einer Vielzahl von Positionen und Abtasten von Frequenzen der Zugangspunkte (14₁, 14₂, ..., 14ₙ), die sich in dem definierten Raum (16) befinden.

13. Verfahren nach Anspruch 12, das weiterhin Folgendes umfasst:
Ermitteln einer Sicherheit einer Genauigkeit der berechneten Position der mobilen Einrichtung.

14. Verfahren nach Anspruch 13, das weiterhin Folgendes umfasst:
basierend auf der Sicherheit der Positionsberechnungsgenauigkeit Anpassen einer Anzahl von nächstgelegenen Zugangspunkten, deren Frequenzen abgetastet werden; und
Verfolgen der Bewegung der mobilen Einrichtung (12₁) durch periodisches Abtasten der Frequenzen der im Augenblick nächstgelegenen Zugangspunkte.

15. Verfahren nach Anspruch 13, das weiterhin Folgendes umfasst:
Vergleichen der ermittelten Sicherheit mit einem geforderten Schwellenwert.

16. Verfahren nach Anspruch 15, das weiterhin Folgendes umfasst:
(a) in Reaktion darauf, dass die Sicherheit unter dem geforderten Schwellenwert liegt, Abtasten der Abtastfrequenzen einer großen Anzahl der Zugangspunkte, welche sich in dem definierten Raum (16) befinden;
(b) Messen tatsächlicher Signalstärken bei jeder der Abtastfrequenzen zwischen der mindestens einen mobilen Einrichtung (12₁) und dem entsprechenden Zugangspunkt;
(c) Organisieren der gemessenen Signalstärken in einer kategorisierten Liste;
(d) erneutes Berechnen der Position der mindestens einen mobilen Einrichtung (12₁);
(e) erneutes Berechnen einer Sicherheit einer Genauigkeit der erneut berechneten Position der mobilen Einrichtung; und
(f) Vergleichen der erneut berechneten Sicherheit mit dem geforderten Schwellenwert.

17. Verfahren nach Anspruch 16, das weiterhin Folgendes umfasst:
in Reaktion darauf, dass die erneut berechnete Sicherheit größer ist als der geforderte Schwellenwert, Auswählen von mindestens drei Zugangspunkten aus der kategorisierten Liste basierend auf Signalstärken.

18. Verfahren nach Anspruch 16, das weiterhin Folgendes umfasst:
in Reaktion darauf, dass die erneut berechnete Sicherheit kleiner ist als der geforderte Schwellenwert, Messen der Anzahl von Abtastfrequenzen aus der kategorisierten Liste;
Wiederholen der Schritte (d) - (f), bis der Schwellenwert überschritten wird, und
Identifizieren einer Gruppe optimaler Abtastfrequenzen.

19. Verfahren nach Anspruch 13, wobei eine Anzahl von nächstgelegenen Zugangspunkten eine Variable ist, die auf der ermittelten Sicherheit der Positionsberechnungsgenauigkeit basiert.

20. Verfahren nach Anspruch 8, wobei die Frequenzen der in der Nähe befindlichen Zugangspunkte unterschiedlich sind.

21. Verfahren nach Anspruch 8, das weiterhin Folgendes umfasst:
Weiterreichen einer Vielzahl von mobilen Einrichtungen in dem definierten Raum (16);
Evaluieren einer Gesamtverteilung der mobilen Einrichtungen in dem definierten Raum (16), um eine Kapazität jedes Zugangspunkts zu ermitteln; und
Zuweisen der nächstgelegenen Zugangspunkte zu jeder mobilen Einrichtung basierend mindestens auf sowohl der ermittelten Kapazität als auch der tatsächlichen Signalstärke.

22. Computerlesbares Medium, auf dem Anweisungen gespeichert sind, die einen Computerprozessor (26) veranlassen, Schritte des Verfahrens nach einem der Ansprüche 8 bis 21 auszuführen.

## Revendications

1. Système de communication comprenant :
une pluralité d'unités sans fil mobiles (12₁, 12₂, ..., 12ₙ) situées à l'intérieur d'un espace défini (16) d'un réseau local sans fil (10) ;
une pluralité de points d'accès (14₁, 14₂, ..., 14ₙ) disposés à des emplacements connus dans l'espace défini (16), chaque point d'accès (14₁, 14₂, ..., 14ₙ) fonctionnant à une fréquence réservée ;
un moyen (50) pour suivre le mouvement d'au moins un dispositif mobile (12₁) à l'intérieur de l'espace défini (16), comprenant :
un moyen (52) pour balayer des fréquences de balayage identifiées de points d'accès proches pour mesurer des forces réelles de signal entre l'au moins un dispositif mobile (12₁) et chacun des points d'accès proches, et
un moyen (56) pour calculer au moins un emplacement de l'au moins un dispositif mobile (12₁) en comparant les forces réelles de signal à une carte (42) de forces relatives de signal à des emplacements prédéfinis dans l'espace défini (16) ;
**caractérisé par** :
un moyen (60) pour attribuer les points d'accès proches avec les signaux les plus forts à l'au moins un dispositif mobile (12₁) sur la base de son emplacement et de la carte (42) des forces relatives dans l'espace défini (16) ; dans lequel le moyen de balayage (52) balaye uniquement les fréquences des points d'accès proches attribués pour suivre le mouvement de l'au moins un dispositif mobile (12₁).

2. Système selon la revendication 1, dans lequel le moyen de suivi (50) suit le mouvement de l'au moins un dispositif mobile (12₁) en balayant périodiquement les fréquences de trois points d'accès attribués adjacents à l'emplacement calculé.

3. Système selon la revendication 1, dans lequel le moyen de suivi de position (50) comprend :
un moyen d'estimation de vélocité (66) pour déterminer la vitesse et la direction du mouvement de l'au moins un dispositif mobile (12₁).

4. Système selon la revendication 2, dans lequel le moyen de suivi (50) comprend :
un moyen (68) pour prédire des emplacements futurs du dispositif mobile (12₁), le moyen d'attribution (60) attribuant les points d'accès proches sur la base de l'emplacement prédit.

5. Système selon la revendication 1, comprenant en outre :
un moyen (72) pour déterminer un degré de certitude d'une précision de l'emplacement calculé.

6. Système selon la revendication 5, dans lequel le nombre de points d'accès proches est une fonction de la certitude de précision d'emplacement et le moyen de suivi (50) suit le mouvement de l'au moins un dispositif mobile (12₁) en balayant périodiquement un nombre variable de fréquences.

7. Système selon la revendication 1, comprenant en outre :
un moyen (38) pour mesurer une pluralité de forces initiales de signal à des emplacements prédéfinis à l'intérieur de l'espace défini (16) ;
un moyen (40) pour cartographier les forces initiales de signal par rapport à des emplacements prédéfinis dans l'espace défini (16) ; et
un moyen (62) pour identifier des emplacements et balayer des fréquences de points d'accès dans l'espace défini (16).

8. Procédé de transfert d'au moins un dispositif mobile (12₁) d'un point d'accès à un autre dans un réseau local sans fil (10), le procédé comprenant les étapes consistant à :
suivre un mouvement d'au moins un dispositif mobile (12₁) à l'intérieur de l'espace défini (16), comprenant :
balayer des fréquences de balayage identifiées correspondant à chacun d'une pluralité identifiée de points d'accès proches ;
mesurer des forces réelles de signal à chacune des fréquences identifiées entre l'au moins un dispositif mobile (12₁) et les points d'accès identifiés, et
calculer au moins un emplacement de l'au moins un dispositif mobile (12₁) en comparant les forces réelles de signal à une carte de forces relatives de signal à des emplacements prédéfinis dans l'espace défini ; et
**caractérisé par** :
attribuer les points d'accès proches avec les signaux les plus forts à l'au moins un dispositif mobile (12₁) sur la base de l'emplacement calculé et de la carte (42) ;
balayer uniquement les fréquences des points d'accès proches attribués pour suivre le mouvement de l'au moins un dispositif mobile (12₁).

9. Procédé selon la revendication 8, comprenant en outre :
suivre le mouvement de l'au moins un dispositif mobile (12₁) en balayant périodiquement les fréquences des trois points d'accès les plus proches.

10. Procédé selon la revendication 8, comprenant en outre :
mettre à jour les fréquences des points d'accès les plus proches au fur et à mesure que le dispositif mobile change d'emplacement.

11. Procédé selon la revendication 8, comprenant en outre :
estimer au moins une vitesse et une direction du mouvement du dispositif mobile (12₁) ;
prédire l'emplacement du dispositif mobile à partir de la vitesse estimée et de la direction estimée ; et
réattribuer les points d'accès les plus proches sur la base de l'emplacement prédit et de la carte (42).

12. Procédé selon la revendication 8, comprenant en outre :
mesurer une pluralité de forces initiales de signal à des emplacements prédéfinis à l'intérieur d'un espace défini (16) ;
cartographier les forces initiales de signal par rapport à des emplacements prédéfinis dans l'espace défini (16) ; et
identifier une pluralité d'emplacements et balayer des fréquences des points d'accès (14₁, 14₂, ..., 14ₙ) situés dans l'espace défini (16).

13. Procédé selon la revendication 12, comprenant en outre :
déterminer une certitude d'une précision de l'emplacement calculé du dispositif mobile.

14. Procédé selon la revendication 13, comprenant en outre :
sur la base de la certitude de la précision de calcul d'emplacement, ajuster un nombre de points d'accès les plus proches dont les fréquences sont balayées ; et
suivre le mouvement du dispositif mobile (12₁) en balayant périodiquement les fréquences des points d'accès actuellement les plus proches.

15. Procédé selon la revendication 13, comprenant en outre :
comparer la certitude déterminée à un seuil demandé.

16. Procédé selon la revendication 15, comprenant en outre :
(a) en réponse au fait que la certitude est inférieure au seuil demandé, balayer les fréquences de balayage d'un grand nombre de points d'accès situés dans l'espace défini (16) ;
(b) mesurer les forces réelles de signal à chacune des fréquences de balayage entre l'au moins un dispositif mobile (12₁) et le point d'accès correspondant ;
(c) organiser les forces de signal mesurées dans une liste catégorisée ;
(d) recalculer l'emplacement de l'au moins un dispositif mobile (12₁) ;
(e) recalculer une certitude d'une précision de l'emplacement recalculé du dispositif mobile ; et
(f) comparer la certitude recalculée au seuil demandé.

17. Procédé selon la revendication 16, comprenant en outre :
en réponse au fait que la certitude recalculée est supérieure au seuil demandé, sélectionner au moins trois points d'accès dans la liste catégorisée sur la base des forces de signal.

18. Procédé selon la revendication 16, comprenant en outre :
en réponse au fait que la certitude recalculée est inférieure au seuil demandé, mesurer le nombre de fréquences de balayage de la liste catégorisée ;
répéter les étapes (d) à (f) jusqu'à ce que le seuil soit dépassé ; et
identifier un ensemble de fréquences de balayage optimales.

19. Procédé selon la revendication 13, dans lequel un nombre de points d'accès les plus proches est une variable basée sur la certitude déterminée de la précision de calcul d'emplacement.

20. Procédé selon la revendication 8, dans lequel les fréquences des points d'accès les plus proches sont différentes.

21. Procédé selon la revendication 8, comprenant en outre les étapes consistant à :
transférer une pluralité de dispositifs mobiles dans l'espace défini (16) ;
évaluer une répartition globale des dispositifs mobiles dans l'espace défini (16) pour déterminer une capacité de chaque point d'accès ; et
attribuer les points d'accès les plus proches à chaque dispositif mobile sur la base au moins de la capacité déterminée et de la force réelle de signal.

22. Support lisible par ordinateur sur lequel sont stockées des instructions amenant un processeur d'ordinateur (26) à effectuer les étapes du procédé selon l'une quelconque des revendications 8 à 21.
